# EUROPÄISCHE PATENTSCHRIFT

(11) **EP 2 876 245 B1**
(45) Veröffentlichungstag und Bekanntmachung des Hinweises auf die Patenterteilung: **03.05.2017**
(21) Anmeldenummer: 14194577.4
(22) Anmeldetag: 24.11.2014
(51) Int. Cl.: E06B 9/00, E04H 9/14, E06B 9/02

(54) **Halteschiene für ein Hochwasserschutzsystem**
Holding rail for a flood protection system
Rail de fixation pour un système de protection contre les crues

(30) Priorität: 22.11.2013 DE 202013105343 U; 23.01.2014 DE 202014100290 U
(43) Veröffentlichungstag der Anmeldung: 27.05.2015
(73) Patentinhaber: F.W. Brökelmann Aluminiumwerk GmbH & Co. KG, 59469 Ense-Höingen (DE)
(72) Erfinder: Schlenz, Rainer, 59457 Werl (DE); Schulte, Danny, 59757 Arnsberg (DE); Röwe, Dennis, 59494 Soest (DE); Fleischer, Dirk, 58640 Iserlohn (DE)
(74) Vertreter: Gesthuysen Patent- und Rechtsanwälte

(56) Entgegenhaltungen:
- EP-A2- 1 384 847
- DE-U1- 9 213 822
- DE-U1-202010 015 708

## Beschreibung

Die Erfindung betrifft eine Halteschiene für ein Hochwasserschutzsystem gemäß dem Oberbegriff des Anspruchs 1. Ferner betrifft die Erfindung ein Hochwasserschutzsystem, zum zumindest teilweisen Verschließen einer Gebäudeöffnung, umfassend mindestens eine erste Halteschiene, mindestens eine zweite Halteschiene, und mindestens eine Schutzplatte, wobei die erste Halteschiene und die zweite Halteschiene jeweils mindestens ein Grundprofil umfassen, wobei die erste Halteschiene und die zweite Halteschiene mit dem Grundprofil an einem Gebäude befestigbar sind, und wobei die Schutzplatte zum zumindest teilweise Verschließen einer Gebäudeöffnung zwischen der ersten Halteschiene und der zweiten Halteschiene befestigbar ist. Wiederkehrende Hochwasser verursachen in den davon betroffenen Gebieten häufig erhebliche Schäden an privatem und öffentlichem Eigentum. Insbesondere werden Gebäude und deren Einrichtung durch eindringendes Wasser und Schlamm beschädigt. Für die Zukunft sind extreme Wetterbedingungen prognostiziert, womit eine steigende Gefahr von Sturmfluten und Hochwässern einhergeht.

Für einen effektiven Schutz gegen Hochwasser, insbesondere um nämlich Schäden durch Wasser und Schlamm zu verhindern oder möglichst gering zu halten, ist es bekannt, Gebäudeöffnungen, z. B. Tür- und Fensteröffnungen, Wasserdicht zu verschließen. Dazu sind Hochwasserschutzsysteme in einer Vielzahl von Ausgestaltungen im Stand der Technik bekannt. Üblicherweise kommen gestapelte Sandsäcke oder vor den Gebäudeöffnungen montierte Schutzplatten zur Anwendung.

Ein weit verbreitetes Hochwasserschutzsystem sieht vor, dass im unteren Bereich einer Gebäudeöffnung - bis zu einer Höhe, bis zu der das Hochwasser erwartet wird - eine Führungsschiene aus U-förmigen Profilen zu montieren. In diese Führungsschiene wird dann eine oder eine Mehrzahl von Schutzplatten mit Dichtungen eingesetzt. Die Schutzplatte bzw. die Schutzplatten erstrecken sich vor der Gebäudeöffnung, wodurch das Eindringen von Wasser und Schlamm verhindert oder zumindest reduziert wird.

Aus der EP 1 384 847 A2 ist ein Hochwasserschutzsystem bekannt, das einen Profilrahmen aufweist, der zumindest an zwei Seiten an eine Gebäudeöffnung angrenzend fest mit dem Gebäude verbunden ist, sowie eine Platte, die mit Schnellbefestigungsmitteln am Profilrahmen befestigbar ist, wodurch die Gebäudeöffnung zumindest teilweise durch die Platte verschließbar ist.

Aus der DE 20 2010 015 708 U1 ist ein Hochwasserschutzsystem in Form eines Hochwasserschutzrahmens bekannt. Der Hochwasserschutzrahmen besteht aus einem Rahmen und einem Schutzmaterial, das am Rahmen befestigt ist. Der Rahmen ist an einer Wand/Mauer befestigbar, vorzugsweise durch Anschrauben.

Die aus dem Stand der Technik bekannten Hochwasserschutzsysteme weisen allerdings den Nachteil auf, dass der wiederkehrende Aufwand für die Montage und Demontage sehr groß ist. Hinzu kommt, dass viele bekannte Hochwasserschutzsysteme optisch nicht ansprechend gestaltet sind.

Der vorliegenden Erfindung liegt daher die Aufgabe zugrunde, ein Hochwasserschutzsystem anzugeben, bei dem der Aufwand für die Montage und die Demontage reduziert ist, und das zudem eine ansprechende optische Gestaltung aufweist.

Die vorgenannte Aufgabe ist im Wesentlichen dadurch gelöst, dass die Halteschiene mindestens ein Federelement umfasst, und dass das Federelement derart zwischen dem Grundprofil und dem Deckprofil angeordnet ist, dass das Federelement das Deckprofil zumindest ab einem vorbestimmten Schwenkwinkel in die Schließstellung drängt.

Das vorliegende Hochwasserschutzsystem ist zum zumindest teilweisen Verschließen einer Gebäudeöffnung mittels der in den mindestens zwei Halteschienen gehaltenen Schutzplatte vorgesehen. Die Schutzplatte wird dazu von der ersten Halteschiene und der zweiten Halteschiene im unteren Bereich der Gebäudeöffnung, beispielsweise ein Fenster oder eine Tür, vor dieser gehalten, so dass das ansteigende Wasser von der Schutzplatte aufgehalten wird. Die Schutzplatte weist vorzugsweise eine rechteckige Außenkontur auf. Es ist vorgesehen, dass die Schutzplatte als eine gleichmäßige Platte ausgebildet ist. Es ist aber auch vorgesehen, dass die Schutzplatte aus einer Mehrzahl von Elementen modular zusammengesetzt ist, beispielsweise aus einer Mehrzahl an Profilen aus Aluminium, die nach dem Prinzip einer Nut-Feder-Verbindung zu einer Schutzplatte zusammengesetzt sind. Die Schutzplatte weist eine Größe auf, die zur Überdeckung der entsprechenden Gebäudeöffnung erforderlich ist.

Eine Halteschiene, insbesondere also sowohl die erste Halteschiene als auch die zweite Halteschiene, umfasst mindestens ein Grundprofil, wobei eine Halteschiene mit dem Grundprofil an einem Gebäude, insbesondere im Bereich einer Gebäudeöffnung befestigbar ist. Das Grundprofil weist dazu eine Anlagefläche auf, die im Wesentlichen eben ausgebildet ist, so dass vorteilhaft ein möglichst geringer Zwischenraum zwischen Anlagefläche des Grundprofils und Wand des Gebäudes im Montagezustand vorhanden ist. Vorzugsweise wird das Grundprofil mit dem Gebäude, insbesondere der Wand, verschraubt, so dass das Grundprofil fest an dem Gebäude angeordnet ist. Zur Abdichtung ist zwischen Anlagefläche und Gebäude vorzugsweise ein Dichtmittel vorgesehen, wobei das Dichtmittel beispielsweise als pastöses Dichtmittel eingebracht wird und anschließend aushärtet oder als vorgefertigte Dichtung vorgesehen ist.

Bevorzugt werden die erste Halteschiene und die zweite Halteschiene rechts und links einer Gebäudeöffnung an dem Gebäude befestigt, wobei die erste Halteschiene und die zweite Halteschiene parallel zueinander verlaufen. Nach der Montage der Halteschienen über die Grundprofile ist die Schutzplatte zwischen der ersten Halteschiene und der zweiten Halteschiene zum zumindest teilweisen Verschließen der Gebäudeöffnung befestigbar. Für den Fall, dass die Halteschienen in der Leibung der Gebäudeöffnung montiert werden sollen, sind Winkelprofile vorgesehen, die in der Leibung befestigt werden, und an denen dann die Halteschienen befestigt werden. Für jede Halteschiene ist dann mindestens ein Winkelprofil vorgesehen.

Zur Befestigung der Schutzplatte umfassen die Halteschienen, insbesondere nämlich die erste Halteschiene und die zweite Halteschiene, jeweils mindestens ein Deckprofil und mindestens ein Federelement. Das Deckprofil ist schwenkbar an dem Grundprofil gehalten, so dass es zwischen einer Öffnungsstellung und einer Schließstellung in Längsrichtung der Halteschiene verschwenkbar ist. Der Winkel zwischen Öffnungsstellung und Schließstellung beträgt vorzugsweise zwischen 70° und 180°, insbesondere 90°. Im montierten Zustand einer Halteschiene ist in der Öffnungsstellung die Schutzplatte einbringbar, indem das Deckprofil von der Gebäudeöffnung weg geschwenkt ist. In der Schließstellung ist das Grundprofil vorzugsweise vollständig von dem Deckprofil überdeckt. Durch eine optisch ansprechende Gestaltung des Deckprofils kann somit eine optisch ansprechende Gestaltung, z. B. an die Farbe des Gebäudes angepasst, des Hochwasserschutzsystems erfolgen.

Damit eine Schutzplatte von dem Deckprofil, das in Richtung der Schließstellung geschwenkt ist, gehalten werden kann, ist das Federelement derart zwischen dem Grundprofil und dem Deckprofil angeordnet, dass das Federelement das Deckprofil zumindest ab einem vorbestimmten Schwenkwinkel in die Schließstellung drängt. Die Federkraft des Federelements bewirkt folglich eine Kraft auf das Deckprofil, dass dadurch in Richtung der Schließstellung verschwenkt wird. Die Federkraft des Federelements wirkt ausgehend von der Öffnungsposition zumindest ab einem bestimmten Schwenkwinkel derart, dass das Deckprofil um die Schwenkachse in Richtung der Schwenkposition geschwenkt wird. Das Federelement bewirkt folglich vorzugsweise zumindest ab einem vorbestimmten Schwenkwinkel des Deckprofils zwischen der Öffnungsstellung und der Schließstellung ein Drehmoment um die Schwenkachse auf das Deckprofil, das in Richtung der Schließstellung gerichtet ist. Im Montagezustand ist die Schutzplatte folglich vorteilhaft entlang der gesamten Länge der Halteschiene derart unterhalb des schwenkbaren Deckprofils angeordnet, dass die Schutzplatte das vollständige erreichen der Schließposition verhindert. Die Schutzplatte weist dazu eine ausreichende Dicke auf. Dadurch übt das Federelement über das Deckprofil eine Kraft auf die Schutzplatte aus, wodurch diese in ihrer Position gehalten wird bzw. gegen die Wand des Gebäudes gedrückt wird.

Das Federelement und das Deckprofil sind vorzugsweise derart ausgebildet und angeordnet, dass die resultierende Federkraft bei eingesetzter Schutzplatte als senkrechte Kraft auf die Schutzplatte resultiert. Die Kraft wirkt vorzugsweise in Normalenrichtung auf eine Ebene, in der auch die Anlagefläche des Grundprofils liegt bzw. in Normalenrichtung zu der Ebene der Oberfläche der Schutzplatte. Durch eine derartige Wirkrichtung der resultierenden Kraft kann die Schutzplatte im Montagezustand vorteilhaft über die gesamte Länge der Halteschiene zwischen Deckprofil und Gebäude bzw. zwischen Deckprofil und Grundprofil unter Wirkung der Kraft des Federelements eingeklemmt werden.

Besonders bevorzugt ist vorgesehen, dass das Federelement derart zwischen Grundprofil und dem Deckprofil angeordnet ist, dass das Federelement das Deckprofil bis zu einem vorbestimmten Schwenkwinkel zwischen Öffnungsstellung und Schließstellung in die Öffnungsstellung drängt, wobei ab dem vorbestimmten Schwenkwinkel das Deckprofil von dem Federelement in die Schließstellung gedrängt wird. Das Federelement muss folglich einen gewissermaßen einen Totpunkt überschreiten, in dem sich die Wirkrichtung der Federkraft ändert. In diesem Fall sind sowohl die Öffnungsstellung des Deckprofils als auch die Schließstellung stabile Endlagen.

Sowohl das Grundprofil als auch das Deckprofil sind vorzugsweise als Strangpressprofile ausgebildet. Als Material ist Aluminium, insbesondere EN AW 6060 T66 (AlMgSi0,5) bevorzugt. Vorteilhaft ist das Grundprofil pulverbeschichtet, insbesondere in RAL-Tönen.

Die vorliegende Erfindung weist den Vorteil auf, dass die Schutzplatte im Montagezustand durch die Deckprofile der Halteschienen stets mit einer Kraft beaufschlagt ist, die die Schutzplatte in den Halteschienen hält und gleichzeitig eine Abdichtung gewährleistet. Auch bei einer stoßartigen Krafteinwirkung, beispielsweise durch Wellenbewegung, wird die Schutzplatte durch die Federkraft zuverlässig gehalten. Zudem ist der Aufwand für die Montage und Demontage reduziert, da die Schutzplatte auf einfache Weise dadurch montiert werden kann, dass die Deckprofile der beiden Halteschienen in die Öffnungsstellung verschwenkt werden, so dass die Schutzplatte zwischen die beiden Halteschienen einbringbar ist, und dass anschließend die Deckprofile der Halteschienen in Richtung der Schließstellung verschwenkt werden, wodurch die Deckprofile unter der Wirkung der Federelemente eine Kraft auf die Schutzplatte ausüben. Da die Federelemente die Deckprofile in die Schließstellung drängen, die Schließstellung aufgrund der eingesetzten Schutzplatte aber nicht endgültig erreicht werden kann, wirkt eine vorteilhafte Federkraft auf die Schutzplatte.

Insbesondere um die Stabilität der Halteschienen des Hochwasserschutzsystems zu verbessern, ist gemäß einer ersten Ausgestaltung vorgesehen, dass das Grundprofil eine in Längsrichtung verlaufende kreiszylindrische Führungsachse aufweist, dass das Deckprofil eine im Wesentlichen halbschalenförmige Führungsnut aufweist, und dass das Deckprofil mit der Führungsnut auf der Führungsachse schwenkbar gelagert ist. Die Führungsachse bildet im Zusammenspiel mit der halbschalenförmigen Führungsnut folglich ein Scharnier, so dass das Deckprofil zwischen einer Öffnungsstellung und einer Schließstellung in Längsrichtung schwenkbar an dem Grundprofil gehalten ist. Die kreiszylindrische Führungsachse umfasst mindestens einem Abschnitt entlang der Gesamtlänge des Grundprofils, wobei bevorzugt vorgesehen ist, dass sich die Führungsachse über die gesamte Länge des Grundprofils erstreckt. Dies ist insbesondere dann vorgesehen, wenn das Grundprofil als Strangpressprofil ausgebildet ist.

Der Außendurchmesser der kreiszylindrischen Führungsachse entspricht im Wesentlichen dem Innendurchmesser der halbschalenförmigen Führungsnut, so dass die Führungsnut drehbar auf der Führungsachse gelagert ist. Es ist vorgesehen, dass die Führungsnut exakt die Form einer Halbschale aufweist, so dass die Führungsnut auf einfache Weise auf die Führungsachse aufsteckbar ist. Dabei ist insbesondere das Federelement derart ausgebildet und angeordnet, dass die Führungsnut auf der Führungsachse gehalten wird. Ferner ist auch vorgesehen, dass die Führungsnut geringfügig über eine exakte Halbschale hinausgeht, so dass die Führungsnut durch elastische Verformung der Führungsnut auf die Führungsachse aufrastbar ist.

Die Führungsachse wird vorteilhaft durch einen in Längsrichtung verlaufenden Steg an dem Grundprofil gehalten, so dass die Öffnungsstellung und die Schließstellung vorzugsweise durch den Kontakt des Steges mit den jeweiligen Enden der halbschalenförmigen Führungsnut definiert sind. Eine Öffnung des Deckprofils ist folglich nur soweit möglich bis der Randbereich der halbschalenförmigen Führungsnut den Steg von der entsprechenden Seite berührt. Das Schließen des Deckprofils kann so weit erfolgen, bis der zweite Randbereich der halbschalenförmigen Führungsnut die gegenüberliegende Seite des Steges berührt - sofern nicht beispielsweise die Schutzplatte ein weiteres Schließen verhindert.

Um insbesondere eine vorteilhafte Kraftübertragung zu gewährleisten, ist gemäß einer weiteren Ausgestaltung vorgesehen, dass das Federelement als mindestens eine Blattfeder ausgebildet ist, insbesondere dass das Federelement als eine über die gesamte Länge des Grundprofils und/oder des Deckprofils vorgesehene Blattfeder ausgebildet ist. Die mindestens eine Blattfeder ist derart ausgebildet und angeordnet, dass das Deckprofil jedenfalls ab einem vorbestimmten Schwenkwinkel zwischen Öffnungsstellung und Schließstellung von der Blattfeder in die Schließstellung gedrängt wird, wodurch ein Einklemmen der Schutzplatte in einer Halteschiene zum Verschließen einer Gebäudeöffnung möglich ist. Beispielsweise durch Wahl der Dicke und der Länge der Blattfeder kann die erforderliche Federkraft eingestellt werden, die zur Halterung der Schutzplatte erforderlich ist. Dabei ist die Länge der Halteschiene zu berücksichtigen. Mit einer Blattfeder, die sich über die gesamte Länge der Halteschiene erstreckt, lässt sich eine besonders hohe Federkraft erzielen. Dabei ist zu berücksichtigen, dass die Federkraft des Federelements nicht so hoch sein darf, dass eine manuelle Bedienung nicht mehr möglich ist, wodurch der Bedienkomfort bei der Montage der Schutzplatte reduziert würde. Die Blattfeder weist vorteilhaft eine im Wesentlichen rechteckige Grundform auf.

Gemäß einer weiteren Ausgestaltung hat sich als besonders vorteilhaft herausgestellt, wenn vorgesehen ist, dass die Blattfeder in einem ersten Seitenbereich mit dem Grundprofil und in einem zweiten Seitenbereich mit dem Deckprofil zusammenwirkt, insbesondere dass die Blattfeder am Grundprofil in einer in Längsrichtung der Halteschiene verlaufenden Lagernut bewegbar gehalten ist. Die Blattfeder weist vorzugsweise eine im wesentlichen rechteckige Grundfläche auf, so dass sich die Blattfeder mit einem ersten Seitenbereich und einem zweiten Seitenbereich im Wesentlichen parallel zur Längserstreckung einer Halteschiene erstreckt. Die Blattfeder ist mit ihrem ersten Seitenbereich in einer Lagernut am Grundprofil bewegbar gehalten. Die Lagernut weist vorzugsweise einen halbschalenförmigen oder Ω-förmigen Querschnitt auf, so dass sich der erste Seitenbereich der Blattfeder beim Verschwenken des Deckprofils aus der Öffnungsstellung in die Schließstellung in der Lagernut bewegen kann. Eine Lagernut mit einem halbschalenförmigen Querschnitt ist in den Seitenbereichen jeweils mit einer Kante versehen. Insbesondere nämlich bei einer halbschalenförmigen Lagernut vollzieht diese im Verlaufe des Verschwenkens eine Bewegung über den gesamten Bogenbereich der halbschalenförmigen Lagernut, nämlich von einer Kante auf der einen Seite der Lagernut zu der zweiten Kante auf der anderen Seite der Lagernut. Durch eine derartige Lagernut wird gewährleistet, dass mit der Feder bis zu einem bestimmten Schwenkwinkel eine Kraft in Richtung der Öffnungsstellung auf das Deckprofil bewirkt wird, wobei ab diesem bestimmten Schwenkwinkel eine Kraft in Richtung der Schließstellung hervorgerufen wird. Der zweite Seitenbereich der Blattfeder, der mit dem Deckprofil zusammenwirkt, ist vorzugsweise ebenfalls in einer an dem Deckprofil vorgesehenen Federnut eingebracht, die jedoch dem zweiten Seitenbereich nur eine sehr geringe oder keine Bewegungsmöglichkeit beim Verschwenken erlaubt.

Gemäß einer weiteren Ausgestaltung ist es besonders bevorzugt, wenn vorgesehen ist, dass die Blattfeder im in parallel zur Längsrichtung der Halteschiene gebogenen Zustand angeordnet ist, so dass die Blattfeder eine zwischen Deckprofil und Grundprofil stets wirkende Federkraft hervorruft. Die zwischen Deckprofil und Grundprofil gebogen angeordnete Blattfeder stützt sich folglich am Grundprofil und am Deckprofil ab, so dass diese stets unter Krafteinwirkung der Feder stehen. Dabei sind die Abstützpunkte der Blattfeder vorteilhaft derart angeordnet, dass zumindest ab einem vorbestimmten Schwenkwinkel zwischen Öffnungsstellung und Schließstellung die Blattfeder das Deckprofil in Richtung Schließstellung drängt. Beim Öffnen einer Halteschiene erfolgt bei Verwendung einer derartigen Feder zunächst ein weiteres Biegen der Blattfeder, folglich eine Bewegung des Deckprofils entgegen der Federkraft. Ab einem bestimmten Schwenkwinkel vollzieht die Blattfeder in der Lagernut eine Bewegung, so dass die Federkraft ab diesem Schwenkwinkel das Deckprofil in Richtung der Öffnungsstellung drängt.

Durch eine derartige Anordnung der Blattfeder wird gewährleistet, dass sowohl die Öffnungsstellung als auch die Schließstellung stabile Endstellungen des Deckprofils sind, so dass einerseits eine einfache Montage der Schutzplatte in den Halteprofilen ermöglicht ist, andererseits ein zuverlässiger Halt der Schutzplatte in den Halteschienen gewährleistet ist. Zusätzlich dient die Blattfeder dazu, das Scharnier aus der kreiszylindrischen Führungsachse und der halbschalenförmigen Führungsnut zu stabilisieren.

Bevorzugt ist eine gegenüberliegende Anordnung der ersten Halteschiene und der zweiten Halteschiene an einer Gebäudeöffnung vorgesehen, wobei die Schutzplatte zwischen den beiden Halteschienen vorgesehen ist und somit eine Gebäudeöffnung zumindest teilweise verschließt. Gemäß einer weiteren Ausgestaltung der Erfindung ist vorzugsweise vorgesehen, dass drei Halteschienen umfasst sind, insbesondere dass die drei Halteschienen im Montagezustand U-förmig zueinander angeordnet sind. Das Vorsehen von drei Halteschienen hat den Vorteil, dass die Stabilität des Hochwasserschutzsystems gesteigert wird, nämlich dadurch, dass an mindestens drei Seitenkanten der Schutzplatte eine Halteschiene über die gesamte Seitenlänge vorgesehen ist. Im Bereich einer Gebäudeöffnung sind die Halteschienen vorzugsweise rechts und links der Gebäudeöffnung, sowie im Bodenbereich der Gebäudeöffnung vorgesehen, so dass die Halteschienen die Schutzplatte im Montagezustand U-förmig umschließen.

Die Stabilität des Hochwasserschutzsystems kann ferner dadurch gesteigert werden, dass mindestens vier Halteschienen vorgesehen sind, und dass die vier Halteschienen im Montagezustand rahmenförmig angeordnet sind. Eine montierte Schutzplatte ist folglich in allen vier Seitenbereichen in einer Halteschiene angeordnet und wird dort über das Deckprofil unter Wirkung der Federkraft des jeweiligen Federelements zuverlässig gehalten.

Um die drei oder vier Halteschienen in ihren Eckbereichen vorteilhaft miteinander zu verbinden, ist gemäß einer weiteren Ausgestaltung vorgesehen, dass das Grundprofil zumindest an seinen Enden ein Aufnahmemittel für einen Eckverbinder aufweist, insbesondere dass das Aufnahmemittel als im Wesentlichen rechteckiger Kanal ausgebildet ist. Zur Montage wird folglich ein Eckverbinder, sowohl in das Aufnahmemittel einer ersten Halteschiene als auch in das Aufnahmemittel einer zweiten Halteschiene eingesteckt, wodurch die Verbindung in diesem Eckbereich durch den Eckverbinder stabilisiert wird. Vorzugsweise sind die Halteschienen in den Eckbereichen auf Gehrung geschnitten, so dass die Schutzplatte in den Eckbereichen der Halteschienen nahtlos gehalten wird. Es ist auch vorgesehen, dass lediglich die Grundprofile auf Gehrung geschnitten sind. Die Deckprofile enden vor dem Eckbereich, wobei der Eckbereich dabei von einer Abdeckkappe abgedeckt ist. Die Abdeckkappe ist beispielsweise als Formteil aus Kunststoff oder Metall ausgebildet und ist auf den Eckbereich aufgesteckt oder aufgerastet. Da sowohl das Grundprofil als auch das Deckprofil vorteilhaft als Strangpressprofile ausgebildet sind, ist vorteilhaft, wenn das Aufnahmemittel als im Wesentlichen rechteckiger Kanal ausgebildet ist. In diesen rechteckigen Kanal ist ein rechteckiger Eckverbinder endseitig einsteckbar.

Vorteilhaft ist dieser rechteckige Kanal mit einem Längsschlitz versehen, so dass eine geringfügige elastische Verformung möglich ist, so dass ein Eckverbinder mit einer Presspassung montierbar ist.

Die Stabilität des Hochwasserschutzsystems wird zudem dadurch gesteigert, dass das Grundprofil einen Anlagesteg aufweist, so dass zwischen dem Anlagesteg und dem Deckprofil unter Wirkung der Federkraft des Federelements eine Schutzplatte einklemmbar ist. Der Anlagesteg führt zu einer Verbreiterung des Grundprofils, so dass zwischen dem in die Schließstellung geschwenkten Deckprofils und dem Anlagesteg, folglich also zwischen dem Grundprofil und dem Deckprofil, unter Wirkung der Federkraft des Federelements eine Schutzplatte einklemmbar ist. Der Anlagesteg vergrößert vorzugsweise die Anlagefläche zur Befestigung des Grundprofils an dem zu schützenden Gebäude.

Eine weitere Ausgestaltung, die besondere Vorzüge insbesondere in Zusammenhang mit der vorstehend beschriebenen Ausgestaltung aufweist, sieht vor, dass an der Schutzplatte im Randbereich zumindest Abschnittsweise eine Dichtung vorgesehen ist, insbesondere eine im Wesentlichen U-förmige Dichtung vorgesehen ist, die vorzugsweise im Randbereich auf die Schutzplatte aufgeschoben ist. Eine derartige Dichtung sorgt dafür, dass der Bereich zwischen Schutzplatte und Gebäude bzw. zwischen Schutzplatte und dem zuvor beschriebenen Anlagesteg bzw. dem Grundprofil abgedichtet wird. Vorteilhaft ist die Dichtung als Flachdichtung ausgebildet. Die Dichtung ist vorteilhaft in allen Bereichen vorgesehen, in denen auch eine Halteschiene vorgesehen ist, so dass stets eine zuverlässige Abdichtung der Halteschienen erfolgt.

Außerdem ist vorgesehen, dass die Dichtung im Wesentlichen U-förmig ausgebildet ist, also einen U-förmigen Querschnitt aufweist, so dass die Dichtung im Randbereich auf die Schutzplatte aufschiebbar ist. Die Schutzplatte mit der Dichtung kann dann auf einfache Weise in die Halteschienen eingesetzt werden, wobei mit dem Deckprofil in der Schließstellung eine Kraft auf die Schutzplatte in Richtung des Gebäudes bzw. in Richtung des Anlagesteges ausübbar ist, wodurch auch die zwischen Schutzplatte und Gebäude bzw. zwischen Schutzplatte und Anlagesteg angeordnete Dichtung belastet wird.

Die Bedienung des Hochwasserschutzsystems wird dadurch vereinfacht, dass gemäß einer weiteren Ausgestaltung vorgesehen ist, dass am Deckprofil mindestens eine Griffmulde ausgebildet ist. Bevorzugt erstreckt sich die Griffmulde über die gesamte Länge des Deckprofils, so dass das Deckprofil von einem Benutzer auf einfache Weise zwischen Öffnungsstellung und Schließstellung bzw. zwischen Schließstellung und Öffnungsstellung verschwenkt werden kann. Besonders vorteilhaft ist die Griffmulde beim Verschwenken des Deckprofils aus der Schließstellung in die Öffnungsstellung.

Gemäß einer weiteren Ausgestaltung des Hochwasserschutzsystems ist vorgesehen, dass an der Schutzplatte ein Stabilisierungsrahmen angeordnet ist. Der Stabilisierungsrahmen umgibt die Schutzplatte vorzugsweise umlaufend entlang des gesamten Umfangs. Der Stabilisierungsrahmen ist dazu beispielsweise in den Randbereichen der Schutzplatte auf die Schutzplatte aufgeschoben oder in den Randbereichen auf der Fläche der Schutzplatte angeordnet. In den Eckbereichen sind die Elemente des Stabilisierungsrahmens beispielsweise über einen Gehrungsschnitt aneinander angepasst. Der Stabilisierungsrahmen ist bevorzugt aus einem Strangpressprofil aus Aluminium gebildet.

Ferner ist vorteilhaft vorgesehen, dass der Stabilisierungsrahmen mindestens eine Nut zur Aufnahme einer Dichtung aufweist. Die Nut ist insbesondere - wie der Stabilisierungsrahmen selbst - umlaufend ausgebildet. Die Dichtung hat beispielsweise einen im Wesentlichen L-förmigen Querschnitt, so dass ein Teil der Dichtung im Montagezustand in der Nut angeordnet ist, während der verbleibende Teil der Dichtung im Wesentlichen in einer zur Ebene der Schutzplatte parallelen Ebene angeordnet ist, um so vorteilhaft mit einer Halteschiene zusammenzuwirken. Vorzugsweise ist die umlaufende Dichtung einstückig ausgebildet. Die Dichtung ist zumindest teilweise so angeordnet, dass sie von der Halteschiene mit einer Kraft beaufschlagt wird, die vorzugsweise in Richtung des Gebäudes gerichtet ist.

Zur Montage wird die Schutzplatte mit dem Stabilisierungsrahmen in den Halteschienen - zwischen Grundprofil und Deckprofil - eingeklemmt, wodurch die Dichtung belastet und eine zuverlässige Abdichtung sicherstellt wird. Der Stabilisierungsrahmen erhöht die Steifigkeit der Schutzplatte, so dass auch größere Gebäudeöffnungen zuverlässig geschützt werden können.

Um insbesondere besonders großen Belastungen standzuhalten, ist gemäß einer weiteren Ausgestaltung vorgesehen, dass die Schutzplatte als Waben- oder Lamellenplatte ausgebildet ist, insbesondere als Waben- oder Lamellenplatteplatte aus einem Aluminium. Die Schutzplatte weist folglich mindestens zwei Außenschichten auf, die im Inneren von einer Waben- bzw. Lamellenstruktur gestützt werden. Eine derartige Schutzplatte hat den Vorteil, dass sie besonders leicht, gleichzeitig aber sehr stabil ist, um der Belastung durch Wasser standzuhalten. Wenn für die Waben- oder Lamellenplatteplatte Aluminium verwendet wird, ist die Wabenplatte zudem auf einfache Weise herstellbar.

Für eine besonders hohe Beanspruchung der Schutzplatte ist gemäß einer weiteren Ausgestaltung vorgesehen, dass auf der Schutzplatte mindestens ein Verstärkungssteg angeordnet ist. Der Verstärkungssteg ist beispielsweise auf die Schutzplatte aufgeklebt oder mit dieser verschraubt und erhöht die Widerstandsfähigkeit der Schutzplatte gegen Biegung. Bei sehr breiten Gebäudeöffnungen ist auch vorgesehen, dass zusätzliche Pfosten, insbesondere senkrechte Pfosten, montiert sind, an denen sich die Halteschienen abstützen oder an denen die Halteschienen montiert sind. Die Pfosten sind dazu beispielsweise auf der Hälfte der Breite der Gebäudeöffnung montiert. Dabei ist auch vorgesehen, dass eine einzige Gebäudeöffnung von mehr als einem Hochwasserschutzsystem zumindest teilweise verschlossen wird. Dazu sind beispielsweise zwei Hochwasserschutzsysteme nebeneinander angeordnet, wobei zwischen den beiden Hochwasserschutzsystemen ein Pfosten angeordnet ist.

Eine weitere Ausgestaltung des Hochwasserschutzsystems sieht vor, dass mindestens ein Spannmittel umfasst ist, dass das Spannmittel endseitig an einer Halteschiene befestigbar ist, und dass mit dem Spannmittel eine im Wesentlichen parallel zur Längsrichtung der entsprechenden Halteschiene gerichtete Kraft auf die Schutzplatte bewirkbar ist. Das Spannmittel wird beispielsweise in dem Aufnahmemittel des Grundprofils befestigt, das beispielsweise als rechteckiger Kanal ausgebildet ist. Bevorzugt wird das Spannmittel zumindest teilweise in das Aufnahmemittel eingesteckt. Vorteilhaft ist das Spannmittel mit einem Rastmechanismus an der Halteschiene, insbesondere im Aufnahmemittel, befestigt. Der Rastmechanismus umfasst beispielsweise eine Öffnung in dem Aufnahmemittel und einen federnd gelagerten Dorn an dem Spannmittel. Zur Befestigung verrastet der federnd gelagerte Dorn formschlüssig in der Öffnung in dem Aufnahmemittel, wodurch das Spannmittel an der Halteschiene befestigt wird. Ein Lösen des Spannmittels kann über eine Betätigung des Dorns entgegen der Federkraft erfolgen.

Das Spannmittel umfasst folglich einen ersten Bereich, mit dem es an der Halteschiene befestigbar ist, und einen zweiten Bereich, der auf die Schutzplatte, insbesondere auf eine Stirnkante der Schutzplatte oder einen vorhandenen Stabilisierungsrahmen einwirkt. Das Spannmittel ist dazu beispielsweise als starrer Spannwinkel oder als umlegbarer Spannbügel ausgebildet. Insbesondere sind mindestens zwei Spannmittel umfasst.

Die Verwendung von mindestens zwei Spannmitteln ist insbesondere bei einem Hochwasserschutzsystem mit jeweils einer Halteschiene links und rechts der Schutzplatte von Vorteil, da die Schutzplatte mit jeweils einem Spannmittel in einer Halteschiene - parallel zu den Halteschienen - beispielsweise in Richtung einer Bodendichtung gepresst werden kann. Bei einer derartigen Anordnung sind die Halteschienen links und rechts der Gebäudeöffnung und die Bodendichtung im Fußbereich der Gebäudeöffnung angeordnet.

Zudem ist gemäß einer letzten Ausgestaltung vorgesehen, dass in der Schutzplatte mindestens eine Nut vorgesehen ist, und dass am Grundprofil ein korrespondierender Steg und/oder am Deckprofil ein korrespondierender Steg vorgesehen ist. Im Montagezustand greift der Steg an dem Grundprofil und/oder der Steg an dem Deckprofil in die Nut und/oder die Nuten in der Schutzplatte ein, wodurch die Stabilität gesteigert wird. Ferner ist auch vorgesehen, dass in der Schutzplatte eine Nut vorgesehen ist, in die im Montagezustand das Deckprofil zumindest teilweise eingreift, wodurch ebenfalls die Stabilität gesteigert wird. Die Nut oder die Nuten verlaufen dazu im Wesentlichen parallel zu den Halteschienen. Die Nut bzw. die Nuten sind vorzugsweise zur einfacheren Montage geringfügig größer als die Stege bzw. der Bereich des Deckprofils, der in die Nut eingreifen soll.

Wesentliche Grundlage der vorliegenden Erfindung sind die erfindungsgemäßen Halteschienen, die gemäß der vorstehenden Beschreibung ausgebildet sind. Die Halteschienen weisen den Vorteil auf, dass sie mit einer Vielzahl unterschiedlicher Schutzplatten verwendbar sind.

Im Einzelnen gibt es nun eine Vielzahl von Möglichkeiten das Hochwasserschutzsystem oder die Halteschiene für ein Hochwasserschutzsystem auszugestalten und weiterzubilden. Dazu wird verwiesen sowohl auf die den Patentansprüchen 1 und 7 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Hochwasserschutzsystems in geschnittener Ansicht,
- Fig. 2: ein Ausführungsbeispiel einer Halteschiene in geschnittener Ansicht,
- Fig. 3a: ein Ausführungsbeispiel eines Deckprofils in geschnittener Ansicht,
- Fig. 3b: ein Ausführungsbeispiel eines Grundprofils in geschnittener Ansicht,
- Fig. 4: ein Ausführungsbeispiel eines Hochwasserschutzsystems im Montagezustand,
- Fig. 5: ein Ausführungsbeispiel eines Hochwasserschutzsystems im Montagezustand, und
- Fig. 6: ein Ausführungsbeispiel eines Hochwasserschutzsystems im Montagezustand.

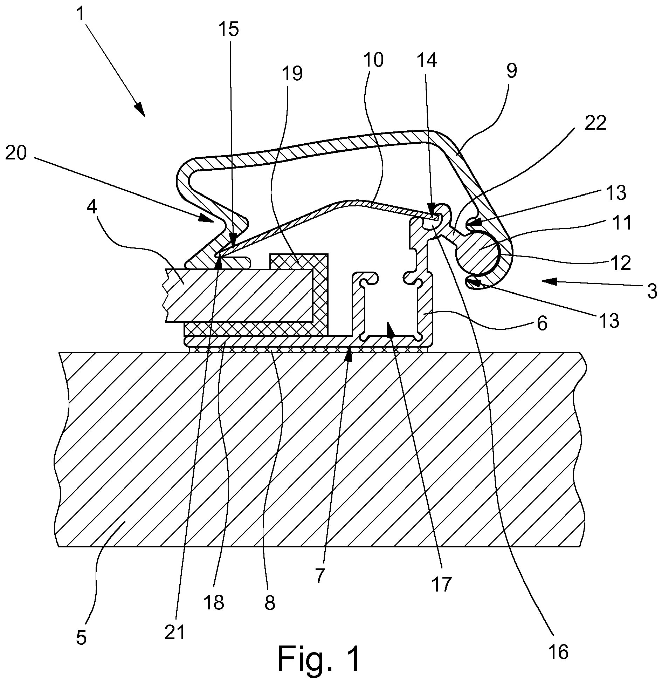

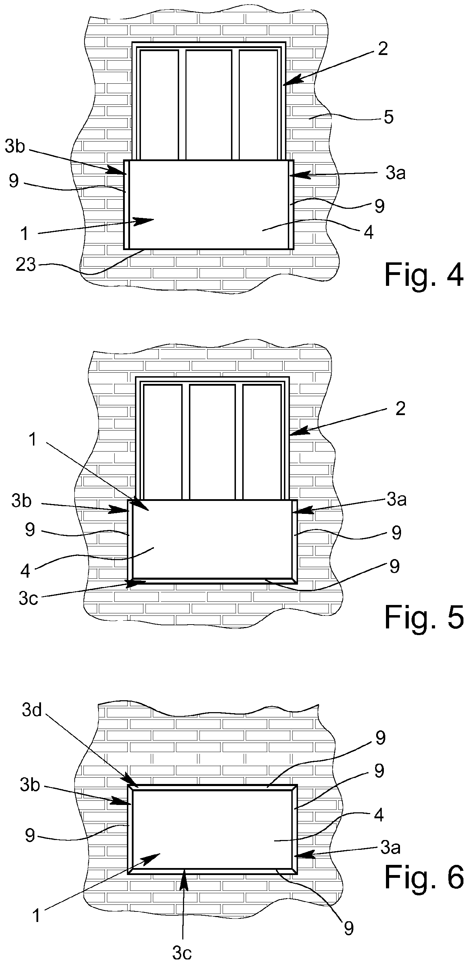

Fig. 1 zeigt ein Ausführungsbeispiel eines Hochwasserschutzsystems 1 im Montagezustand in geschnittener Ansicht. Das Hochwasserschutzsystems 1 dient zum zumindest teilweisen Verschließen einer in den Fig. 4 bis 6 dargestellten Gebäudeöffnung 2, gemäß Fig. 4 bis 6 eines Fensters. Insbesondere in Fig. 4 ist dargestellt, dass das Hochwasserschutzsystems 1 eine erste Halteschiene 3a und zweite Halteschiene 3b umfasst. Zwischen der ersten Halteschiene 3a und der zweiten Halteschiene 3b ist eine Schutzplatte 4 von den Halteschienen 3 gehalten.

Fig. 1 zeigt eine Halteschiene 3 im an einer Wand 5 im Bereich einer Gebäudeöffnung montierten Zustand. Die Halteschiene 3 umfasst ein Grundprofil 6, das eine Anlagefläche 7 aufweist, wobei das Grundprofil 6 mit der Anlagefläche 7 an der Wand 5 des Gebäudes anliegt. Zwischen Anlagefläche 7 und der Wand 5 ist eine Flachdichtung 8 angeordnet. Das Grundprofil 6 ist mit der Wand 5 verschraubt, wodurch die Halteschiene 3 an der Wand 5 befestigt ist. Die Halteschiene 3 umfasst ferner ein Deckprofil 9 und ein Federelement 10. Das Deckprofil 9 ist an dem Grundprofil 6 schwenkbar gehalten, so dass es zwischen einer Öffnungsstellung und einer Schließstellung in Längsrichtung schwenkbar an dem Grundprofil 6 gehalten ist. Gemäß Fig. 1 erfolgt das Schwenken in Richtung des Öffnungsbereichs im Uhrzeigersinn.

Um die Schwenkbarkeit des Deckprofils 9 zu gewährleisten, ist an dem Grundprofil 6 eine in Längsrichtung verlaufende kreiszylindrische Führungsachse 11 ausgebildet, auf der eine an dem Deckprofil 9 vorgesehene halbschalenförmige Führungsnut 12 gelagert ist. Die Bewegung des Deckprofils 9 zwischen Öffnungsstellung und Schließstellung wird durch die Randbereiche 13 der halbschalenförmigen Führungsnut 12 begrenzt. Das Deckprofil 9 ist gemäß Fig. 1 nahezu vollständig in der Schließstellung und wird von dem Federelement 10 in die Schließstellung und damit gegen die Schutzplatte 4 gedrängt.

Das Federelement 10 ist bei diesem Ausführungsbeispiel als Blattfeder ausgebildet und ist derart zwischen dem Grundprofil 6 und dem Deckprofil 9 angeordnet, dass das Federelement 10 das Deckprofil 9 ab einem vorbestimmten Schwenkwinkel, insbesondere aber in der dargestellten Stellung, in die Schließstellung drängt. Das Federelement 10 verursacht folglich eine Drehbewegung des Deckprofils 9 um die Führungsachse 11, so dass vorliegend eine Kraft auf die Schutzplatte 4 ausgeübt wird. Das Federelement 10 in Form einer Blattfeder wirkt in einem ersten Seitenbereich 14 mit dem Grundprofil 6 und in einem zweiten Seitenbereich 15 mit dem Deckprofil 9 zusammen. Das Federelement 10 in Form der Blattfeder ist im Wesentlichen rechteckig ausgebildet. Das Federelement 10 ist im ersten Seitenbereich 14 beweglich in einer Lagernut 16 gehalten. Die Lagernut 16 weist einen im Wesentlichen Ω-förmigen Querschnitt auf. Das Federelement 10 in Form der Blattfeder ist im gebogenen Zustand zwischen dem Grundprofil 6 und dem Deckprofil 9 angeordnet, so dass stets eine Federkraft zwischen Grundprofil 6 und Deckprofil 9 anliegt. Die Schutzplatte 4 wird im dargestellten Zustand unter Wirkung des Federelements 10 zwischen dem Deckprofil 9 und dem Grundprofil 6 eingeklemmt.

Um die Stabilität des Hochwasserschutzsystems 1 zu steigern, insbesondere bei Verwendung von mehr als zwei Halteschienen 3, weist das Grundprofil 6 ein bei diesem Ausführungsbeispiel im Wesentlichen rechteckiges Aufnahmemittel 17 auf, das als rechteckiger Kanal ausgebildet ist. In dieses Aufnahmemittel 17 ist ein - nicht dargestellter - rechteckiger Eckverbinder zum Verbinden von zwei Halteschienen 3 einsteckbar.

Das Grundprofil 6 weist einen Anlagesteg 18 auf, der dazu führt, dass die Schutzplatte 4 zwischen Grundprofil 6 und Deckprofil 9 einklemmbar ist. Zwischen Anlagesteg 18 und der Schutzplatte 4 ist zudem eine Dichtung 19 vorgesehen, die bei diesem Ausführungsbeispiel im Wesentlichen U-förmig ausgebildet ist und im Randbereich auf die Schutzplatte 4 aufgeschoben ist. Durch die Dichtung 19 wird ein Durchtritt von Wasser im Bereich der Halteschiene 3 verhindert.

Um die Bedienung des Hochwasserschutzsystems 1 zu vereinfachen, weist das Deckprofil 9 eine Griffmulde 20 auf, die über die gesamte Längserstreckung des Deckprofils 9 vorgesehen ist. Zum Öffnen des Deckprofils 9, nämlich zum Verschwenken aus der Schließstellung in die Öffnungsstellung, kann die Griffmulde 20 von einem Benutzer auf einfache Weise gegriffen und das Deckprofil 9 entgegen der Federkraft des Federelements 10 verschwenkt werden.

Beim Verschwenken des Deckprofils 9 aus der dargestellten Stellung in die Öffnungsstellung erfolgt zunächst eines weiteres Biegen des Federelements 10, wodurch das Federelement 10 der Bewegung in Richtung der Öffnungsstellung entgegenwirkt. Ab einem vorbestimmten Schwenkwinkel bewegt sich der erste Seitenbereich 14 des Federelements 10 innerhalb der Lagernut 16, wodurch die Wirkrichtung der Federkraft des Federelements 10 geändert wird, so dass das Federelement 10 ab diesem Schwenkwinkel das Deckprofil 9 in Richtung der Öffnungsstellung drängt. Auf diese Weise gewährleistet das Federelement 10, dass sowohl die Schließstellung als auch die Öffnungsstellung stabile Endstellungen sind.

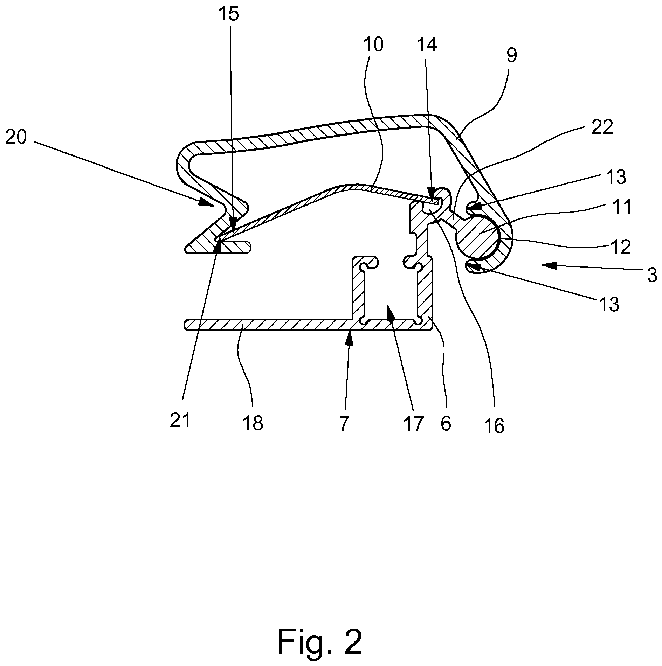

Fig. 2 zeigt ein Ausführungsbeispiel einer Halteschiene 3 - gemäß Fig. 1 - in einem Schwenkwinkel zwischen Öffnungsstellung und Schließstellung, tendenziell mehr in Richtung der Schließstellung. Das Federelement 10 drängt bei diesem Schwenkwinkel das Deckprofil 9 in Richtung der Schließstellung, da keine Schutzplatte angeordnet ist.

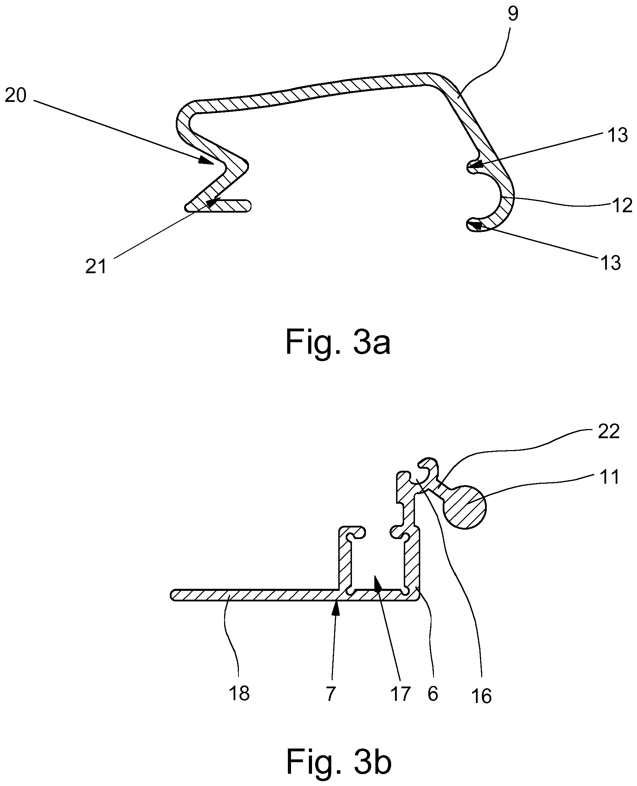

Fig. 3a zeigt ein Ausführungsbeispiel eines Deckprofils 9 in geschnittener Ansicht. Das Deckprofil 9 weist eine Griffmulde 20 zum Verschwenken des Deckprofils 9 aus einer Schließstellung in eine Öffnungsstellung oder umgekehrt auf. Ferner umfasst das dargestellte Deckprofil 9 eine halbschalenförmige Führungsnut 12 sowie eine Federnut 21, in der - gemäß Fig. 1 und 2 - der zweite Seitenbereich 15 eines Federelements 10 angeordnet ist.

Fig. 3b zeigt ein Ausführungsbeispiel eines Grundprofils 6 in geschnittener Ansicht. Das Grundprofil 6 weist eine Führungsachse 11 auf, die über einen Steg 22 an dem Grundprofil 6 gehalten ist. Das Grundprofil 6 weist ferner ein Aufnahmemittel 17 in Form eines einseitig offenen, im Wesentlichen rechteckigen Kanals auf. Zudem ist ein Anlagesteg 18 vorgesehen, der die Anlagefläche 7 vergrößert und zudem ein Einklemmen einer - in Fig. 1 dargestellten - Schutzplatte 4 zwischen einem Deckprofil 9 und dem Anlagesteg 18 des Grundprofils 6 unter Wirkung der Federkraft des Federelements 10 ermöglicht.

Fig. 4 zeigt - wie bereits ausgeführt - ein Ausführungsbeispiel eines Hochwasserschutzsystems 1 im Montagezustand vor einer Gebäudeöffnung 2. Die erste Halteschiene 3a und die zweite Halteschiene 3b sind mit der Wand 5 rechts und links der Gebäudeöffnungen 2 verschraubt und verlaufen parallel zueinander. Die Schutzplatte 4 ist unterhalb der Deckprofile 9 eingeklemmt. Im unteren Bereich der Schutzplatte 4 ist bei diesem Ausführungsbeispiel eine Dichtung 23 vorgesehen, die ein Eindringen von Wasser im unteren Bereich der Schutzplatte 4 verhindert.

Fig. 5 zeigt ein Ausführungsbeispiel eines Hochwasserschutzsystems 1 mit einer ersten Halteschiene 3a, einer zweiten Halteschiene 3b und einer dritten Halteschiene 3c. Die drei Halteschienen 3 sind U-förmig zueinander angeordnet, so dass die Schutzplatte 4 an drei Seitenkanten von jeweils einer Halteschiene 3 umgeben ist. Die Halteschienen 3 sind an der Wand 5 um die Gebäudeöffnung 2 herum befestigt.

Fig. 6 zeigt ein Ausführungsbeispiel eines Hochwasserschutzsystems 1 mit einer ersten Halteschiene 3a, einer zweiten Halteschiene 3b, einer dritten Halteschiene 3c und einer vierten Halteschiene 3d. Alle vier Halteschienen 3 sind rahmenartig um die Schutzplatte 4 herum angeordnet, so dass die Schutzplatte 4 entlang ihres gesamten Umfangs - aller Seitenkanten - durch die Halteschienen 3 stabilisiert und abgedichtet wird. Sämtliche Deckprofile 9 der Halteschienen 3 üben eine Kraft auf die Schutzplatte 4 aus, so dass diese zuverlässig in ihrer Position vor der Gebäudeöffnung gehalten wird. Die Halteschienen 3 bilden einen geschlossenen Rahmen um die Gebäudeöffnung. Die Gebäudeöffnung liegt hinter dem Hochwasserschutzsystem 1 und wird vollständig diesem verschlossen.

## Patentansprüche

1. Halteschiene (3) für ein Hochwasserschutzsystem (1), umfassend mindestens ein Grundprofil (6) und mindestens ein Deckprofil (9), wobei die Halteschiene (1) mit dem Grundprofil (6) an einem Gebäude befestigbar ist, und wobei das Deckprofil (9) zwischen einer Öffnungsstellung und einer Schließstellung in Längsrichtung schwenkbar an dem Grundprofil (6) gehalten ist,
**dadurch gekennzeichnet,**
**dass** die Halteschiene (3) mindestens ein Federelement (10) umfasst, und dass das Federelement (10) derart zwischen dem Grundprofil (6) und dem Deckprofil (9) angeordnet ist, dass das Federelement (10) das Deckprofil (9) zumindest ab einem vorbestimmten Schwenkwinkel in Richtung der Schließstellung drängt.

2. Halteschiene (3) nach Anspruch 1, **dadurch gekennzeichnet, dass** das Grundprofil (6) eine in Längsrichtung verlaufende kreiszylindrische Führungsachse (11) aufweist, dass das Deckprofil (9) eine im Wesentlichen halbschalenförmige Führungsnut (12) aufweist, und dass das Deckprofil (9) mit der Führungsnut (12) auf der Führungsachse (11) schwenkbar gelagert ist.

3. Halteschiene (3) nach Anspruch 1 oder 2, **dadurch gekennzeichnet, dass** das Federelement (10) als mindestens eine Blattfeder ausgebildet ist, insbesondere dass das Federelement (10) als eine über die gesamte Länge des Grundprofils (6) und/oder des Deckprofils (9) vorgesehene Blattfeder ausgebildet ist.

4. Halteschiene (3) nach Anspruch 3, **dadurch gekennzeichnet, dass** die Blattfeder in einem ersten Seitenbereich (14) mit dem Grundprofil (6) und in einem zweiten Seitenbereich (15) mit dem Deckprofil (9) zusammenwirkt, insbesondere dass die Blattfeder am Grundprofil (6) in einer in Längsrichtung der Halteschiene (3) verlaufenden Lagernut (16) bewegbar gehalten ist.

5. Halteschiene (3) nach Anspruch 3 oder 4, **dadurch gekennzeichnet, dass** die Blattfeder im in parallel zur Längsrichtung der Halteschiene (3) gebogenen Zustand angeordnet ist, so dass die Blattfeder eine zwischen Deckprofil (9) und Grundprofil (6) stets wirkende Federkraft hervorruft.

6. Halteschiene (3) nach einem der Ansprüche 1 bis 5, **dadurch gekennzeichnet, dass** das Grundprofil (6) zumindest an seinen Enden ein Aufnahmemittel (17) für einen Eckverbinder aufweist, insbesondere dass das Aufnahmemittel (17) als im Wesentlichen rechteckiger Kanal ausgebildet ist.

7. Hochwasserschutzsystem (1), zum zumindest teilweisen Verschließen einer Gebäudeöffnung (2), umfassend mindestens eine erste Halteschiene (3a), mindestens eine zweite Halteschiene (3b), und mindestens eine Schutzplatte (4), wobei die erste Halteschiene (3a) und die zweite Halteschiene (3b) jeweils mindestens ein Grundprofil (6) umfassen, wobei die erste Halteschiene (3a) und die zweite Halteschiene (3b) mit dem Grundprofil (6) an einem Gebäude befestigbar sind, und wobei die Schutzplatte (4) zum zumindest teilweise Verschließen einer Gebäudeöffnung (2) zwischen der ersten Halteschiene (3a) und der zweiten Halteschiene (3b) befestigbar ist,
**dadurch gekennzeichnet,**
**dass** die erste Halteschiene (3a) und die zweite Halteschiene (3b) jeweils nach einem der Ansprüche 1 bis 6 ausgebildet sind.

8. Hochwasserschutzsystem (1) nach Anspruch 7, **dadurch gekennzeichnet, dass** mindestens eine dritte Halteschiene (3c) umfasst ist, insbesondere dass die drei Halteschienen (3) im Montagezustand U-förmig zueinander angeordnet sind.

9. Hochwasserschutzsystem (1) nach Anspruch 8, **dadurch gekennzeichnet, dass** mindestens eine vierte Halteschiene (3d) umfasst ist, insbesondere dass die vier Halteschienen (3) im Montagezustand rahmenartig angeordnet sind.

10. Hochwasserschutzsystem (1) nach einem der Ansprüche 7 bis 9, **dadurch gekennzeichnet, dass** das Grundprofil (6) einen Anlagesteg (18) aufweist, so dass zwischen dem Anlagesteg (18) und dem Deckprofil (9) unter Wirkung der Federkraft des Federelements (10) die Schutzplatte (4) einklemmbar ist.

11. Hochwasserschutzsystem (1) nach einem der Ansprüche 7 bis 10, **dadurch gekennzeichnet, dass** an der Schutzplatte (4) mindestens im Randbereich zumindest abschnittsweise eine Dichtung (19) vorgesehen ist, insbesondere eine im Wesentlichen U-förmige Dichtung (19) vorgesehen ist, die vorzugsweise im Randbereich auf die Schutzplatte (4) aufgeschoben ist.

12. Hochwasserschutzsystem (1) nach einem der Ansprüche 7 bis 11, **dadurch gekennzeichnet, dass** an der Schutzplatte (4) ein Stabilisierungsrahmen angeordnet ist, insbesondere dass der Stabilisierungsrahmen mindestens eine Nut zur Aufnahme einer Dichtung aufweist.

13. Hochwasserschutzsystem (1) nach einem der Ansprüche 7 bis 12, **dadurch gekennzeichnet, dass** mindestens ein Spannmittel umfasst ist, dass das Spannmittel endseitig an einer Halteschiene (3) befestigbar ist, und dass mit dem Spannmittel eine Kraft parallel zur Längsrichtung der Halteschiene (3) auf die Schutzplatte (4) aufbringbar ist.

14. Hochwasserschutzsystem (1) nach einem der Ansprüche 7 bis 13, **dadurch gekennzeichnet, dass** in der Schutzplatte (4) mindestens eine Nut vorgesehen ist, und dass am Grundprofil (6) ein korrespondierender Steg und/oder am Deckprofil (9) ein korrespondierender Steg vorgesehen ist.

## Claims

1. Holding rail (3) for a flood protection system (1), comprising at least one base profile (6) and at least one cover profile (9), wherein the holding rail (3) can be attached to a building with the base profile (6),
and wherein the cover profile (9) is held pivotably in the longitudinal direction on the base profile (6) between an open position and a closed position, **characterized in**
**that** the holding rail (3) comprises at least one spring element (10) and that the spring element (10) is arranged between the base profile (6) and the cover profile (9) so that the spring element (10) pushes the cover profile (9) in the direction of a closed position, at least starting at a predetermined pivot angle.

2. Holding rail (3) according to claim 1, **characterized in that** the base profile (6) has a circular-cylindrical guide axis (11), that the cover profile (9) has an essentially semi-circular guide groove (12), and that the cover profile (9) with the guide groove (12) is pivotably positioned on the guide axis (11).

3. Holding rail (3) according to claim 1 or 2, **characterized in that** the spring element (10) is designed as at least one leaf spring, in particular that the spring element (10) is designed as a leaf spring over the entire length of the base profile (6) and/or the cover profile (9).

4. Holding rail (3) according to claim 3, **characterized in that** the leaf spring interacts with the base profile (6) in a first side region (14) and interacts with the cover profile (9) in a second side region (15), in particular that the leaf spring is movably held on the base profile (6) in a bearing groove (16) in the longitudinal direction of the holding rail (3).

5. Holding rail (3) according to claim 3 or 4, **characterized in that** the leaf spring is arranged in a flexed state parallel to the longitudinal direction of the holding rail (3), so that the leaf spring creates a constantly active spring force between the cover profile (9) and the base profile (6).

6. Holding rail (3) according to any one of claims 1 to 5, **characterized in that** the base profile (6) has a receptacle (17) for a corner connector at least at its ends, in particular that the receptacle (17) is designed as an essentially rectangular channel.

7. Flood protection system (1) for at least partially closing a building opening (2), comprising at least a first holding rail (3a), at least a second holding rail (3b), and at least a protective plate (4), wherein the first holding rail (3a) and the second holding rail (3b) each comprise at least a base profile (6), wherein the first holding rail (3a) and the second holding rail (3b) can be attached to a building with the base profile (6), and wherein the protective plate (4) can be attached between the first holding rail (3a) and the second holding rail (3b) for at least partially closing a building opening (2),
**characterized in**
**that** the first holding rail (3a) and the second holding rail (3b) are each designed according to any one of claims 1 to 6.

8. Flood protection system (1) according to claim 7, **characterized in that** at least a third holding rail (3c) is comprised, in particular that the three holding rails (3) are arranged in a u-shape to one another in the mounted state.

9. Flood protection system (1) according to claim 8, **characterized in that** at least a fourth holding rail (3d) is comprised, in particular that the four holding rails (3) are arranged as a frame in the mounted state.

10. Flood protection system (1) according to any one of claims 7 to 9, **characterized in that** the base profile (6) has an installation bar (18), so that the protective plate (4) can be clamped between the installation bar (18) and the cover profile (9) under the spring force of the spring element (10).

11. Flood protection system (1) according to any one of claims 7 to 10, **characterized in that** a seal (19) is provided on the protective plate (4) at least in sections at least in the edge area, in particular a u-shaped seal (19) is provided, which is slid onto the protective plate (4) preferably in the edge area.

12. Flood protection system (1) according to any one of claims 7 to 11, **characterized in that** a stabilizing frame is arranged on the protective plate (4), in particular that the stabilizing frame has at least one groove for accommodating a seal.

13. Flood protection system (1) according to any one of claims 7 to 12, **characterized in that** at least one clamping device is comprised, that the clamping device can be attached to an end of a holding rail (3) and that a force parallel to the longitudinal direction of the holding rail (3) can be applied to the protective plate (4) with the clamping device.

14. Flood protection system (1) according to any one of claims 7 to 13, **characterized in that** at least one groove is provided in the protective plate (4) and that a corresponding bar is provided on the base profile (6) and/or a corresponding bar is provided on the cover profile (9).

## Revendications

1. Rail de fixation (3) pour un système de protection contre les crues (1), comprenant au moins un profilé de base (6) et au moins un profilé de recouvrement (9), le rail de fixation (1) pouvant être fixé avec le profilé de base (6) à un bâtiment, et le profilé de recouvrement (9) étant retenu entre une position d'ouverture et une position de fermeture de manière pivotante dans la direction longitudinale sur le profilé de base (6),
**caractérisé en ce que**
le rail de retenue (3) comprend au moins un élément de ressort (10) et **en ce que** l'élément de ressort (10) est disposé entre le profilé de base (6) et le profilé de recouvrement (9) de telle sorte que l'élément de ressort (10) pousse le profilé de recouvrement (9) au moins à partir d'un angle de pivotement prédéterminé dans la direction de la position de fermeture.

2. Rail de retenue (3) selon la revendication 1, **caractérisé en ce que** le profilé de base (6) présente un axe de guidage cylindrique circulaire (11) s'étendant dans la direction longitudinale, **en ce que** le profilé de recouvrement (9) présente une rainure de guidage (12) essentiellement en forme de demi-coque, et **en ce que** le profilé de recouvrement (9) est supporté avec la rainure de guidage (12) de manière pivotante sur l'axe de guidage (11).

3. Rail de retenue (3) selon la revendication 1 ou 2, **caractérisé en ce que** l'élément de ressort (10) est réalisé sous forme d'au moins un ressort à lame, en particulier **en ce que** l'élément de ressort (10) est réalisé sous forme de ressort à lame prévu sur toute la longueur du profilé de base (6) et/ou du profilé de recouvrement (9).

4. Rail de retenue (3) selon la revendication 3, **caractérisé en ce que** le ressort à lame coopère dans une première région latérale (14) avec le profilé de base (6) et dans une deuxième région latérale (15) avec le profilé de recouvrement (9), en particulier **en ce que** le ressort à lame est retenu de manière déplaçable sur le profilé de base (6) dans une rainure de support (16) s'étendant dans la direction longitudinale du rail de retenue (3).

5. Rail de retenue (3) selon la revendication 3 ou 4, **caractérisé en ce que** le ressort à lame est disposé dans l'état cintré parallèlement à la direction longitudinale du rail de retenue (3), de telle sorte que le ressort à lame cause une force de ressort agissant constamment entre le profilé de recouvrement (9) et le profilé de base (6).

6. Rail de retenue (3) selon l'une quelconque des revendications 1 à 5, **caractérisé en ce que** le profilé de base (6) présente au moins au niveau de ses extrémités un moyen de réception (17) pour un raccord d'angle, en particulier **en ce que** le moyen de réception (17) est réalisé sous forme de canal essentiellement rectangulaire.

7. Système de protection contre les crues (1), pour la fermeture au moins partielle d'une ouverture de bâtiment (2), comprenant au moins un premier rail de retenue (3a), au moins un deuxième rail de retenue (3b), et au moins une plaque de protection (4), le premier rail de retenue (3a) et le deuxième rail de retenue (3b) comprenant à chaque fois au moins un profilé de base (6), le premier rail de retenue (3a) et le deuxième rail de retenue (3b) pouvant être fixés avec le profilé de base (6) à un bâtiment, et la plaque de protection (4), pour la fermeture au moins partielle d'une ouverture de bâtiment (2), pouvant être fixée entre le premier rail de retenue (3a) et le deuxième rail de retenue (3b),
**caractérisé en ce que**
le premier rail de retenue (3a) et le deuxième rail de retenue (3b) sont chacun réalisés selon l'une quelconque des revendications 1 à 6.

8. Système de protection contre les crues (1) selon la revendication 7, **caractérisé en ce qu'**au moins un troisième rail de retenue (3c) est prévu, en particulier **en ce que** les trois rails de retenue (3) sont disposés en forme de U les uns par rapport aux autres dans l'état de montage.

9. Système de protection contre les crues (1) selon la revendication 8, **caractérisé en ce qu'**au moins un quatrième rail de retenue (3d) est prévu, en particulier **en ce que** les quatre rails de retenue (3) sont disposés en forme de cadre dans l'état de montage.

10. Système de protection contre les crues (1) selon l'une quelconque des revendications 7 à 9, **caractérisé en ce que** le profilé de base (6) présente une nervure d'appui (18) de telle sorte que la plaque de protection (4) puisse être serrée sous l'effet de la force de ressort de l'élément de ressort (10) entre la nervure d'appui (18) et le profilé de recouvrement (9).

11. Système de protection contre les crues (1) selon l'une quelconque des revendications 7 à 10, **caractérisé en ce qu'**un joint d'étanchéité (19) est prévu au moins en partie sur la plaque de protection (4) au moins dans la région du bord, en particulier un joint d'étanchéité (19) essentiellement en forme de U, qui est enfoncé de préférence dans la région du bord sur la plaque de protection (4).

12. Système de protection contre les crues (1) selon l'une quelconque des revendications 7 à 11, **caractérisé en ce qu'**un cadre de stabilisation est disposé sur la plaque de protection (4), en particulier **en ce que** le cadre de stabilisation présente au moins une rainure pour recevoir un joint d'étanchéité.

13. Système de protection contre les crues (1) selon l'une quelconque des revendications 7 à 12, **caractérisé en ce qu'**au moins un moyen de serrage est prévu, **en ce que** le moyen de serrage peut être fixé du côté de l'extrémité à un rail de retenue (3), et **en ce qu'**une force peut être appliquée avec le moyen de serrage sur la plaque de protection (4) parallèlement à la direction longitudinale du rail de retenue (3).

14. Système de protection contre les crues (1) selon l'une quelconque des revendications 7 à 13, **caractérisé en ce qu'**au moins une rainure est prévue dans la plaque de protection (4), et **en ce qu'**une nervure correspondante est prévue sur le profilé de base (6) et/ou une nervure correspondante est prévue sur le profilé de recouvrement (9).
